# EUROPEAN PATENT SPECIFICATION

(11) **EP 2 902 687 B1**
(45) Date of publication and mention of the grant of the patent: **17.04.2019**
(21) Application number: 14153656.5
(22) Date of filing: 03.02.2014
(51) Int. Cl.: F16L 37/00, B64G 5/00, F16L 37/23, F16L 37/62

(54) **Cryogenic connector**
Kryogenischer Verbinder
Connecteur cryogénique

(43) Date of publication of application: 05.08.2015
(73) Proprietor: RUAG Schweiz AG, 8052 Zürich (CH)
(72) Inventor: Eaton, Nicholas Charles, 8197 Rafz (CH)
(74) Representative: OK pat AG

(56) References cited:
- WO-A1-01/31249
- WO-A1-2014/010965
- FR-A1- 2 719 281
- FR-A1- 2 943 627
- FR-A2- 2 658 479
- US-A- 3 847 413
- US-A- 4 617 975
- US-A- 5 301 723

## Description

### FIELD OF THE INVENTION

The present invention relates to a cryogenic connector for conveying a cryogenic medium, in particular to a cryogenic connector configured to be releasable upon liftoff of a launcher.

### BACKGROUND OF THE INVENTION

Launchers (also called launch vehicles) of payloads fuelled by cryogenic propellants require special fuelling systems - usually part of a launch pad - since the tanks holding such cryogenic propellants need to be continuously topped off before and right up to liftoff due to evaporation therein. This is particularly necessary as complex launch sequences (countdowns) may be interrupted by planned and unplanned holds to account for unforeseen problems. Fuelling systems must be designed and constructed to meet these types of servicing requirements both during launch and in the preparation period leading up to it.

It is therefore desirable to maintain a connection between the launcher and fuelling system as long as possible before liftoff. Furthermore for safety reasons the fuelling system must also allow the tanks of the launcher to be emptied quickly in case of an aborted mission. However, reconnection of the fuel supply hoses after an aborted liftoff is complicated and therefore time consuming as often all support arms of the launch tower have been separated from the launcher, posing a great risk due to the delay in emptying the fuel tank of the launcher.

As a liftoff may be aborted very late, in order to address such aborted launches/ aborted liftoffs and to ensure the option of timely emptying the tanks of the launcher, the fuelling systems are connected with the launcher (preferably by a fuel supply hose) by means of releasable connectors until launcher takeoff, i.e. separation of the launcher and disconnection of the cryogenic connector is actually triggered by the effective liftoff of the launcher by a certain vertical distance. This is achieved in that a cryogenic connector is provided which is configured to disconnect at lift-off when the launcher moves away from the launch-tower. A close-release element of the connector (such as an external connector locking ring) is connected with the launch tower with a lanyard and is pulled open by the action of the launcher liftoff. This known approach is simple and the concept has been validated on several types of launcher interfaces.

However, while these know lanyard-activated solutions do provide for a very late disconnection only upon actual liftoff, they are susceptible to unintentional disconnections, which could be disastrous since it may affect the ability to empty the tank of fluid or vented gas. Unintentional disconnection could also pose a hazard to launch personnel. Possible causes of early disconnection are:
- Swaying of the external cryolines in strong winds, or large movements due to internal pressurization effects;
- Swaying of the launcher relative to the launch tower in strong winds or during transfer to the launch zone if unexpected braking/acceleration occurs;
- Ice formation on the lanyards or falling of ice from other parts onto the lanyards;
- Birds;
- Accidental contact with the fuel line at the launch site;
- Impact from another, unrelated, external disconnect system.

WO 2014/010965 A1 discloses a pipeline coupler for connecting at least two pipelines. The pipeline coupler comprises: a first valve main body, which is fixed to an end of a first pipeline, is provided with a first flow path, and which is provided with a penetrating ball accommodation aperture on an outer peripheral portion, for gripping a plurality of balls; a first sleeve, which surrounds the outer periphery of the first valve body, is slidably coupled to a position between a coupling position and a releasing position in the lengthwise direction, and is provided with a ball support portion which is protrudingly formed on one area on the inner periphery thereof, so as to press the outer circumferential surface of the ball; a spring which is assembled between the first sleeve and the first valve main body, so that the ball support portion is positioned at the coupling position where the outer circumferential surface of the ball is pressed; and a tensile member of which one end is fixed to the outer circumferential surface of the first sleeve. As a result, the couple can be attached/detached even from a remote distance or in a space that is not reachable by a worker.

US 3,847,413 discloses a quick release pipe or hose coupling which is held engaged by a source of fluid pressure. On release of the fluid pressure, the coupling disengages instantly. Coupling and decoupling is accomplished by the advancement or retraction of a piston which on advancement forces ball elements into detents and on retraction removes the ball elements from the detents. The ball elements are a part of the female coupling element and the detents are in the peripheral surface of the male coupling element.

US 4,617,975 discloses a tension actuated fuel delivery hose uncoupler in which, upon a predetermined tension or pressure load being applied to the delivery pump hose, the coupling will automatically uncouple thus releasing one end of the hose which, for example, may remain inserted in the fuel tank of a vehicle driving away from the fuel dispensing pump, and the other portion of the hose which is permanently affixed to the pump. The coupler includes normally closed checkvalves which, upon uncoupling of the coupler, close thereby preventing spillage of fuel. Further, the coupler is adjustable so that it may be calibrated to uncouple at predetermined tension loads.

### TECHNICAL PROBLEM TO BE SOLVED

The objective of the present invention is therefore to provide a cryogenic connector which on one hand allows very late, liftoff triggered disconnection/ release and on the other hand prevents unintentional release of the connector.

### SUMMARY OF THE INVENTION

The above-identified objective of the present invention is solved according to independent claim 1 by a cryogenic connector comprising a connector plug and a connector socket configured for conveying a cryogenic medium between said plug passage and socket passage when the connector plug is lockably received by the connector socket. The connector plug comprises a generally cylindrical plug body having a generally cylindrical plug passage extending therethrough and a nipple.

The connector socket comprises a generally cylindrical socket body having a generally cylindrical socket passage extending therethrough; a quick-acting coupling configured to be lockingly engageable with said nipple, said quick-acting coupling having a close-release element configured to be able to switch said quick-acting coupling between a closed position and a released position.

To mitigate the risk of unintentional disconnect of the cryogenic connector during pre-launch, the connector socket comprises a securing device configured for applying a securing force on said close-release element to secure the quick-acting coupling in its closed position. In order to allow the connector plug to be separated from the connector socket, a means for releasing is provided, configured to apply a release force opposite to and greater than said securing force onto said close-release element to thereby bring the quick-acting coupling in its released position.

### ADVANTAGEOUS EFFECTS

The most important advantage associated with the present invention is that a cryogenic connector is provided which allows liftoff triggered release but at the same time greatly reduces the risks of accidental separation release, thus providing for the required operational safety.

### BRIEF DESCRIPTION OF THE DRAWINGS

Further characteristics and advantages of the invention will in the following be described in detail by means of the description and by making reference to the drawings. Which show:
- Fig. 1: a side view of a first embodiment of the cryogenic connector according to the present invention, the connector plug and connector socket being separated;
- Fig. 2: a perspective view of a first embodiment of the cryogenic connector according to the present invention, the connector plug and connector socket being separated;
- Fig. 3: a side view of a first embodiment of the cryogenic connector according to the present invention, the connector plug being lockably received by the connector socket;
- Fig. 4: a perspective view of a first embodiment of the cryogenic connector according to the present invention, the connector plug being lockably received by the connector socket;
- Fig. 5A: a schematic side view of a launch site, with a launcher carrying a payload being connected with a fuelling system of a launch tower by means of a fuel supply hose connected to the launcher by means of a cryogenic connector according to the present invention, the launcher being shown before liftoff;
- Fig. 5B: a schematic side view of the launch site of figure 5A, the launcher being shown during liftoff, the cryogenic connector - which on Fig. 5A connected the fuel supply hose to the launcher - being released;
- Fig. 6A: a side cross section of cryogenic connector according to the present invention being used to releasably connect a fuel tank with a payload fairing within a launcher; showing the payload fairing before its separation from the payload;
- Fig. 6B: a side cross section of the use of the cryogenic connector of Fig. 6A, showing the separation of the payload fairing from the payload and disconnection of the cryogenic connector.

Note: The figures are not drawn to scale, are provided as illustration only and serve only for better understanding but not for defining the scope of the invention. No limitations of any features of the invention should be implied form these figures.

### DESCRIPTION OF PREFERRED EMBODIMENTS

Certain terms will be used in this patent application, the formulation of which should not be interpreted to be limited by the specific term chosen, but as to relate to the general concept behind the specific term

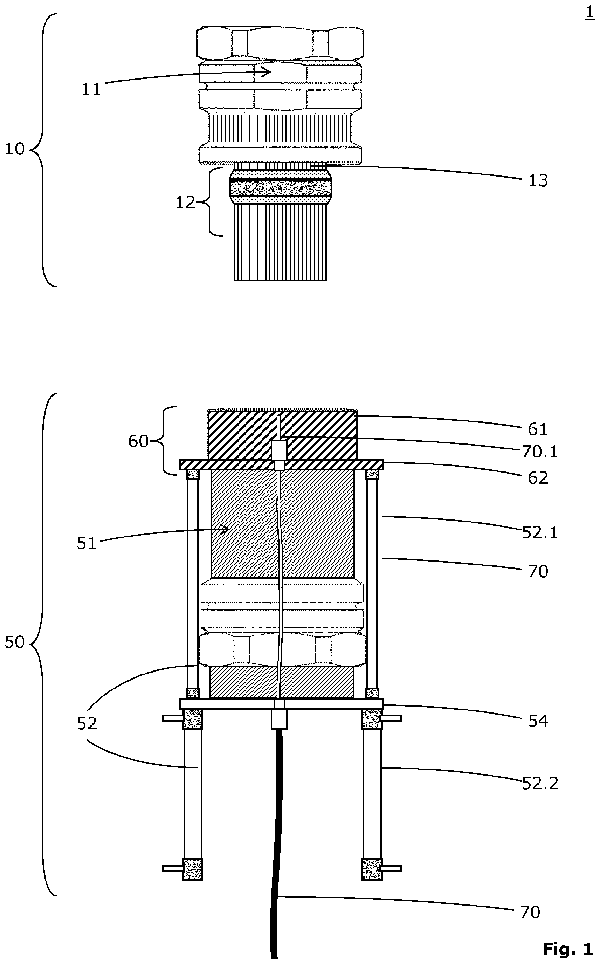

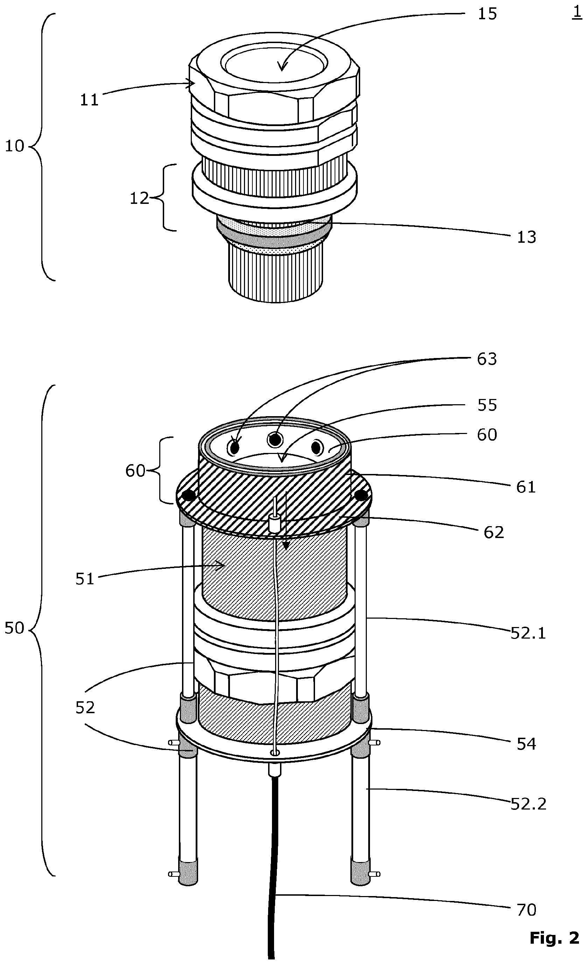

Turing now to figures 1 and 2, which show a side respectively a perspective view of a first embodiment of the cryogenic connector 1 according to the present invention, the main structural and functional features of the present invention shall be described. As it can be well identified on this figure, the cryogenic connector 1 comprises two main structural parts, the connector plug 10 and the connector socket 50. It shall be noted that both the connector plug 10 and connector socket 50 are made of a material suitable to resist the extreme temperatures of the cryogenic medium conveyed therethrough.

Shown on the upper part of figures 1 and 2, the connector plug10 comprises a generally cylindrical plug body 11 having a generally cylindrical plug passage 15 extending therethrough and a nipple 12 being lockably receivable in by the connector socket 50.

The second main structural element of the cryogenic connector 1 is the connector socket 50, shown on the lower part of figures 1 and 2. The connector socket 50 comprises a generally cylindrical socket body 51; a quick-acting coupling 60; a securing device 52; and a means for releasing the close-release element 62.

The generally cylindrical socket body 51 making up the bulk of the connector is provided with a generally cylindrical socket passage 55 extending therethrough for conveying the cryogenic medium.

In order to engage the connector socket 50 with the connector plug 10, a quick-acting coupling 60 is provided, configured to be lockingly engageable with said nipple 12, the quick-acting coupling 60 having a close-release element 62 configured to be able to switch said quick-acting coupling 60 between a closed position and a released position. In the closed position of the quick-acting coupling 60, the connector plug 10 can not be removed from the connector socket 50 while in its released position, the connector plug 10 is free to be removed therefrom.

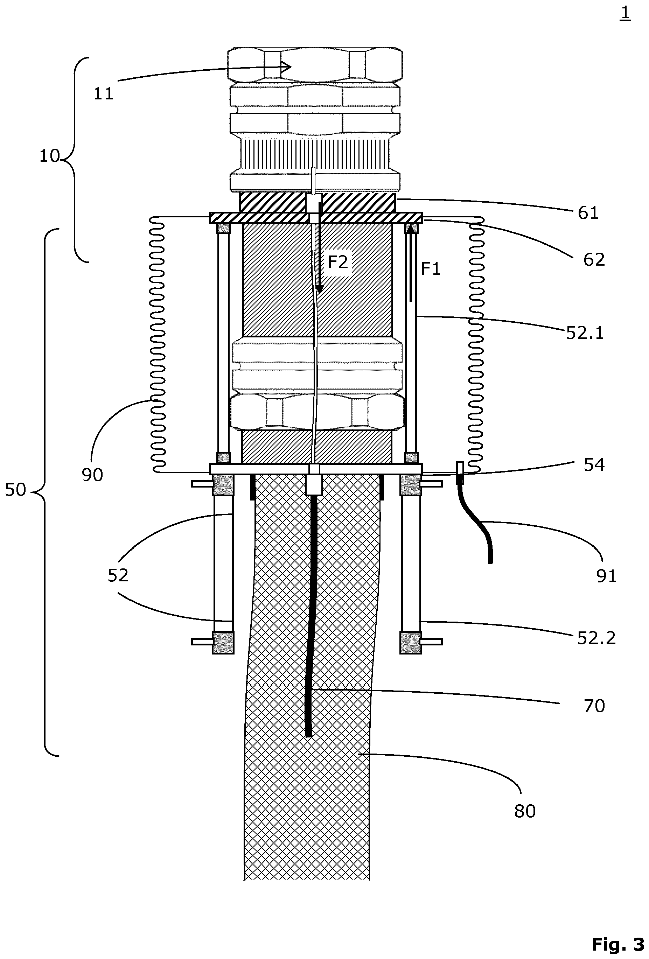

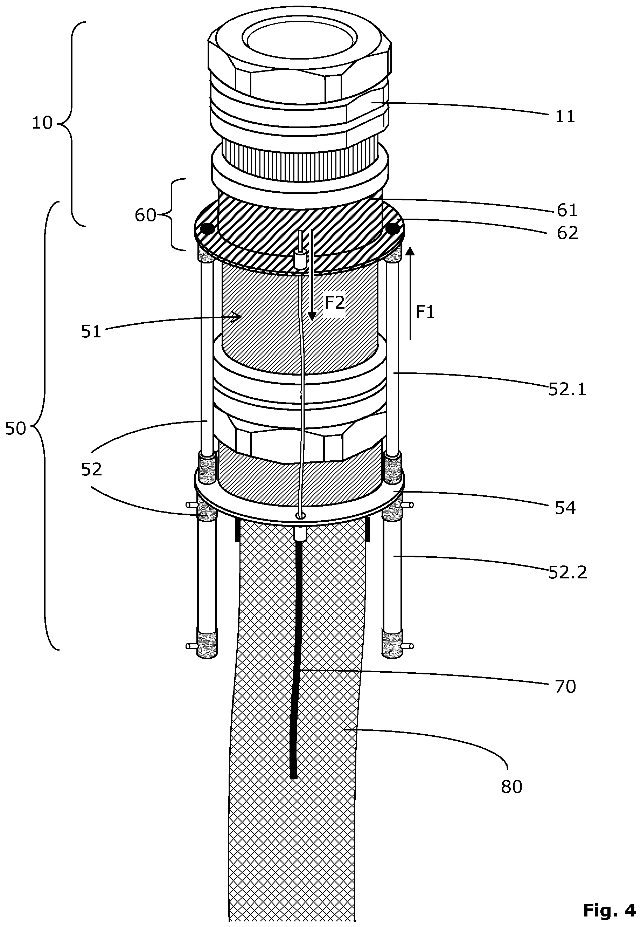

In order to prevent accidental release of the connector plug 10 from the connector socket 50, a securing device 52 is provided and configured for applying a securing force F1 on said close-release element 62 to secure the quick-acting coupling 60 in its closed position - as it shall be described with reference to figures 3 and 4.

To allow the quick-acting coupling 60 to be releasable from its closed position - by switching the close-release element 62 into its released position, a means for releasing the close-release element 62 is provided, configured to apply a release force F2 opposite to and greater than said securing force F1 onto said close-release element 62 to thereby bring the quick-acting coupling 60 in its released position, for allowing the connector plug 10 to be separated from the connector socket 50 - as it shall be described with reference to figures 3 and 4.

The figures depict a particularly preferred embodiment of the connector socket 50, wherein the means for releasing the close-release element 62 is arranged to be connectable to a first end 70.1 of a lanyard 70 and configured so that said lanyard acts on said close-release element 62 upon the cryogenic connector 1 being pulled apart from a distal end of said lanyard 70.

Figure 2 depicts one exemplary embodiment of the quick-acting coupling, constructed essentially as a ball-lock coupling 60 comprising a group of balls 63 positioned in holes located around an internal circumference of the cylindrical socket body 51. In order to engage with the ball-lock coupling 60, the nipple 12 of the connector plug 10 comprises a locking groove 13. In the same embodiment, the close-release element 62 is a locking ring attached to a locking sleeve 61 arranged around an outer circumference of the cylindrical socket body 51 and configured for forcing, in the closed position of the ball-lock coupling 60, the group of balls 63 towards the locking groove 13 so as to thereby lock the connector plug 10 with the connector socket 50.

Figures 3 and 4 show a side respectively a perspective view of a first embodiment of the cryogenic connector 1 according to the present invention, the connector plug 10 being lockably received by the connector socket 50. According to the present invention, the securing device 52 is a pneumatic securing device 52 comprising a pneumatic actuator configured to apply said securing force F1 onto said close-release element 62. The pneumatic actuator 52 comprises a cylinder 52.2, preferably fixed to an actuator fixation ring 54 attached to the socket body 51 and a piston 52.1 with a distal end acting on said close-release element 62

As shown on figures 3 and 4, the connector socket 50 and/or connector plug 10 is/are adapted for receiving a cryogenic hose 80.

Schematically illustrated on figure 3 is a coupler bellow 90, being provided around the cryogenic connector 1 preferably along its entire length from a distal end of the connector plug 10 to a distal end of the connector socket 50, the coupler bellow 90 being provided for preventing icing of the cryogenic connector 1 when conveying cryogenic medium therethrough. As an additional measure. the coupler bellow 90 is preferably provided with a purge gas supply line 91 for providing the coupler bellow 90 with a purge gas.

The securing force F1 applied by the securing device 52 on the close-release element 62 to secure the quick-acting coupling 60 in its closed position as well as opposite release force F2 applied by the means for releasing the close-release element 62 onto the close-release element 62 to thereby bring the quick-acting coupling 60 in its released position, for allowing the connector plug 10 to be separated from the connector socket 50 are both illustratively shown on figures 3 and 4 by means of opposite arrows F1 and F2.

The connector plug 10 and the connector socket 50 of the cryogenic connector 1 of the present invention is preferably connected/ disconnected as follows:
- before the connector plug 10 being connected, the close-release element 62 of the quick-acting coupling 60 is brought in its released position - either by deactivating the securing device 52 or alternatively by activating both the securing device and the means for releasing the close-release element 62 with a higher release force F2 than the securing force F1;
- the connector plug 10 and the connector socket 50 are joined by inserting the nipple 12 of the connector plug 10 into the connector socket 50;
- in order to secure the connection and to prevent accidental release, the securing device 52 is activated to applying a securing force F1 on said close-release element 62 to secure the quick-acting coupling 60 in its closed position;
- for allowing release of the cryogenic connector 1, the means for releasing the close-release element 62 is activated, preferably by means of the lanyard 70 acting on the close-release element 62 upon the connector plug 10 (attached to a launcher until liftoff) being pulled apart from a distal end of said lanyard 70.

According to the present invention, the securing device 52 further comprises a connector spring configured to apply a secondary securing force onto said locking ring 62. Therefore, the securing force F1 may be released just before desired disconnection (e.g. liftoff of the launcher) so that the means for releasing the close-release element 62 only have to act against said secondary securing force.

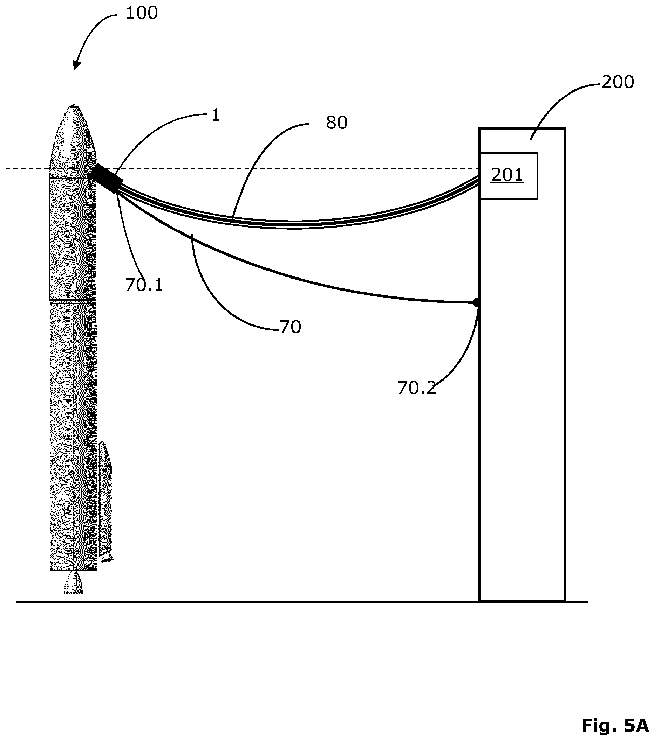

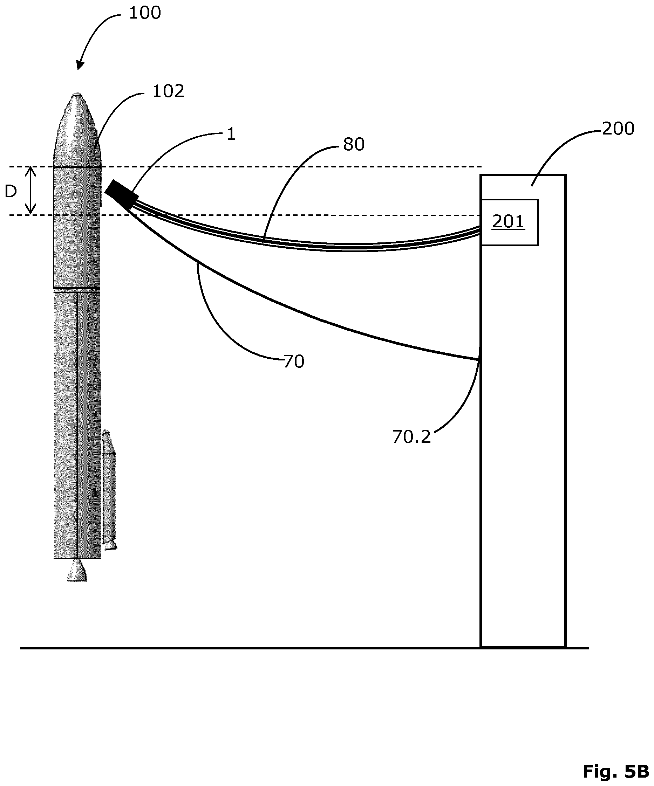

Figures 5A and 5B show schematic side views of a launch site, with a launcher 100 carrying a payload/rocket, the launcher 100 being connected with a fuelling system 201 of a launch tower 200 by means of a fuel supply hose 80 connected to the launcher 100 by means of a cryogenic connector 1 according to the present invention. These figures also illustrate well how the lanyard 70 connects the means for releasing the close-release element 62 and the launch tower 200.

Figure 5A shows the launcher 100 before liftoff, the connector socket 50 and connector plug 10 of the cryogenic connector 1 being connected with each other. The lanyard 70 is under no tension/ its normal tension and its "pull" is negligible or at least not high enough to overcome the securing force F1 acting on the close release element 62 of the cryogenic connector 1.

Figure 5B on the other hand shows a schematic side view of the launch site of figure 5A, as the launcher 100 lifts off. As a direct effect of the launcher 100 liftoff, a tension is exercised on the lanyard 70 connecting the cryogenic connector 1 with the launch tower 70. When the launcher 100 reaches a predefined lift-off distance D, the tension thereby applied on the lanyard 70 results in a release force F2 opposite to and greater than said securing force F1 being applied onto said close-release element 62 and the connector plug 10 is released from the connector socket 50.

In order to reduce the required tension on the lanyard 70 for release, in a particular embodiment, the pneumatic actuator 52 of the securing device 52 is caused to reduce the securing force F1 shortly before the lift-off of the launcher 100.

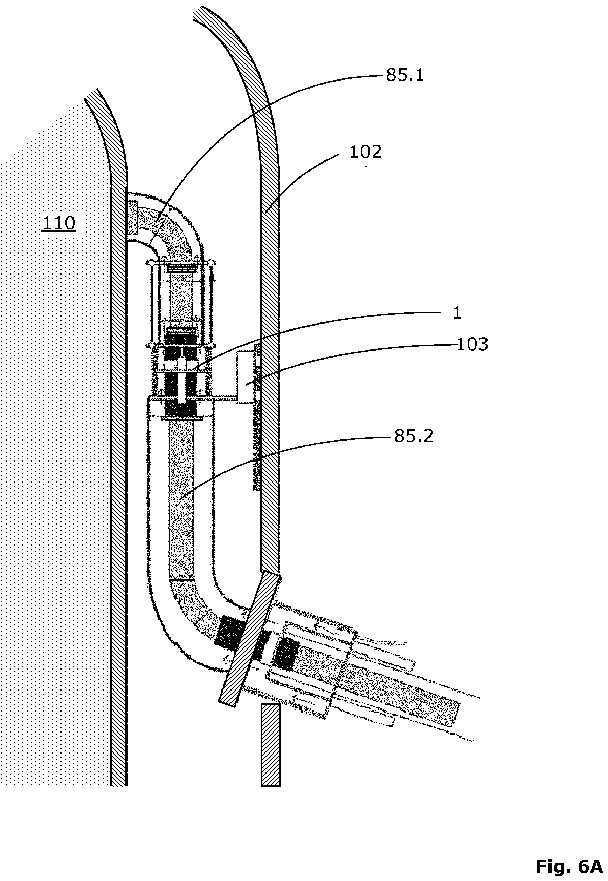

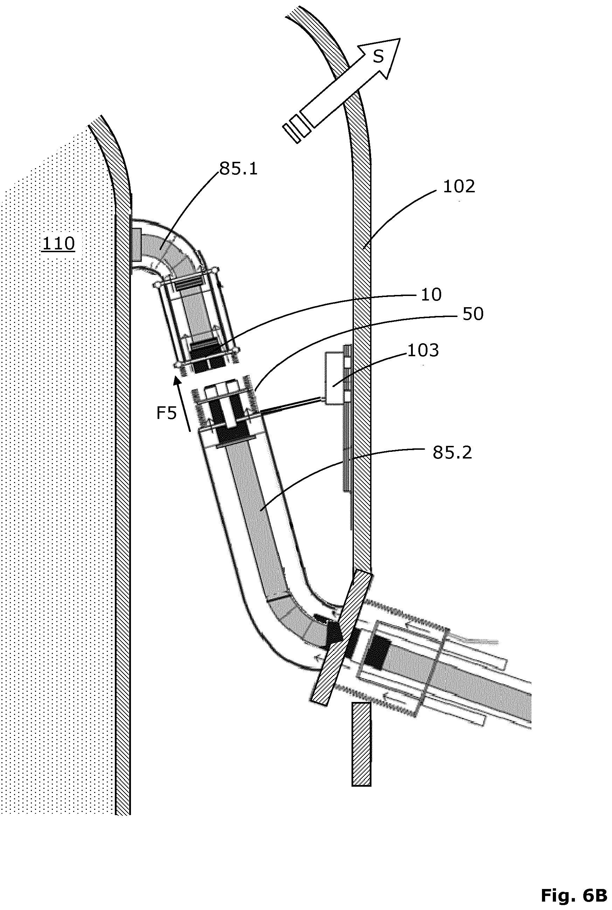

As illustrated on figures 6A and 6B, the cryogenic connector 1 of the present invention finds use also in releasably connecting a fuel tank 110 with a payload fairing 102 within a launcher 100. As illustrated, the connector plug 10 is connected to the payload fairing 102 of the launcher 100 by means of a first connecting hose(s) 85.1 while the connector socket 50 is connected to said tank 110 by means of a second connecting hose(s) 85.2. Alternatively the connector socket 50 may be connected to the payload fairing 102 and the connector plug 10 be connected to the tank 110.

Fig. 6B, showing a side cross section of the use of the cryogenic connector 1 illustrates the separation S of the payload fairing 102 from the launcher 100 and disconnection of the cryogenic connector 1. In order to allow such separation S of the payload fairing 102 from the tank 110, a pneumatic connector separation device 103 is provided to apply a separation force F5 upon or shortly before separation of said payload fairing 102 so as to thereby disconnect the connector plug 10 from the connector socket 50.

In a preferred embodiment, the connector separation device 103 is a pneumatic connector separation device 103 configured to act on said close-release element 62, said pneumatic connector separation device 103 being preferably attached to the payload fairing 102.

It will be understood that many variations could be adopted based on the specific structure hereinbefore described without departing from the scope of the invention as defined in the following claims.

**REFERENCE LIST:**

| | |
|---|---|
| cryogenic connector | 1 |
| connector plug | 10 |
| plug body | 11 |
| nipple | 12 |
| locking groove | 13 |
| plug passage | 15 |
| connector socket | 50 |
| socket body | 51 |
| securing device | 52 |
| piston (of pneumatic securing device) | 52.1 |
| cylinder (of pneumatic securing device) | 52.2 |
| pneumatic actuator | 53 |
| actuator fixation ring | 54 |
| socket passage | 55 |
| connector spring | 56 |
| quick acting coupling | 60 |
| locking sleeve | 61 |
| lock-release element | 62 |
| group of balls | 63 |
| lanyard | 70 |
| first end (of lanyard) | 70.1 |
| second end (of lanyard) | 70.2 |
| fuel supply hose | 80 |
| first connecting hose | 85.1 |
| second connecting hose | 85.2 |
| coupler bellow | 90 |
| launcher | 100 |
| payload fairing | 102 |
| connector separation device | 103 |
| tank | 110 |
| launch tower | 200 |
| fuelling system | 201 |
| securing force | F1 |
| secondary securing force | F1s |
| release force | F2 |
| threshold force | F3 |
| lift-off distance | D |

## Claims

1. A cryogenic connector (1) comprising:
- a connector plug (10) comprising:
- a generally cylindrical plug body (11) having a generally cylindrical plug passage (15) extending therethrough;
- a nipple (12);
- a connector socket (50) comprising:
- a generally cylindrical socket body (51) having a generally cylindrical socket passage (55) extending therethrough;
- a quick-acting coupling (60) configured to be lockingly engageable with said nipple (12), said quick-acting coupling (60) having a close-release element (62) configured to be able to switch said quick-acting coupling (60) between a closed position and a released position;
- a securing device (52) configured for applying a securing force (F1) on said close-release element (62) to secure the quick-acting coupling (60) in its closed position;
- means for releasing the close-release element (62) configured to apply a release force (F2) opposite to and greater than said securing force (F1) onto said close-release element (62) to thereby bring the quick-acting coupling (60) in its released position, for allowing the connector plug (10) to be separated from the connector socket (50);
wherein the cryogenic connector (1) is configured for conveying a cryogenic medium between said plug passage (15) and socket passage (55) when the connector plug (10) is lockably received by the connector socket (50),
**characterized in that** said securing device (52) is a pneumatic securing device comprising a pneumatic actuator configured to apply said securing force (F1) onto said close-release element (62), and **in that** said securing device (52) further comprises a connector spring configured to apply a secondary securing force onto said locking ring (62).

2. A cryogenic connector (1) according to claim 1
**characterized in that** said means for releasing the close-release element (62) is arranged to be connectable to a first end (70.1) of a lanyard (70) and configured so that said lanyard acts on said close-release element (62) upon the cryogenic plug (10) being pulled apart from a distal end of said lanyard (70).

3. A cryogenic connector (1) according to claim 1 or 2
**characterized in that:**
- said quick-acting coupling is a ball-lock coupling (60) comprising a group of balls (63) positioned in holes located around an internal circumference of the cylindrical socket body (51);
- said nipple (12) of the connector plug (10) comprises a locking groove (13);
- said close-release element (62) is a locking ring attached to a locking sleeve (61) arranged around an outer circumference of the cylindrical socket body (51) and configured for forcing, in the closed position of the ball-lock coupling (60), said group of balls (63) towards the locking groove (13) so as to thereby lock the connector plug (10) with the connector socket (50).

4. A cryogenic connector (1) according to claim 1
**characterized in that** said pneumatic actuator (52) comprises a cylinder (52.2), preferably fixed to an actuator fixation ring (54) attached to the socket body (51) and a piston (52.1) with a distal end acting on said close-release element (62).

5. A cryogenic connector (1) according to one of the preceding claims
**characterized in that** said connector socket (50) and/or connector plug (10) is/are adapted for receiving a cryogenic hose (80).

6. A cryogenic connector (1) according to one of the preceding claims
**characterized in that** said the nipple (12) of the connector plug (10) is provided with a predetermined breaking point configured to rupture upon application of a threshold force greater than said release force (F2) for ensuring separation of the connector plug (10) and the connector socket (50) even despite a malfunction of the quick-acting coupling (60) and/or the securing device (52) and/or the means for releasing the close-release element (62).

7. A cryogenic connector (1) according to one of the preceding claims
**characterized in that** a coupler bellow (90) is provided around the cryogenic connector (1) preferably along its entire length from a distal end of the connector plug (10) to a distal end of the connector socket (50), the coupler bellow (90) being provided for preventing icing of the cryogenic connector (1) when conveying cryogenic medium therethrough.

8. A cryogenic connector (1) according to claim 7
**characterized in that** said coupler bellow (90) is provided with a purge gas supply line (91) for providing the coupler bellow (90) with a purge gas.

9. Use of a cryogenic connector (1) according to one of the claims 2 to 8 for releasably connecting a fuelling system (201) of a launch tower (200) to a launcher (100) for a payload/ rocket,
**characterized in that:**
- the connector plug (10) of the cryogenic connector (1) is attached to said launcher (100);
- the connector socket (50) is attached to an extreme end of a fuel supply hose (80);
- an opposing distal end of said fuel supply hose (80) is attached to said fuelling system (201);
- a first end (70.1) of said lanyard (70) is attached to said close-release element (62);
- a distal second end (70.2) of the lanyard (70) is attached to said launch-tower (200);
wherein the cryogenic connector (1) is configured such that upon a lift-off of said launcher (100) by a predefined lift-off distance (D), the tension thereby applied on the lanyard (70) results in a release force (F2) opposite to and greater than said securing force (F1) being applied onto said close-release element (62) so as to thereby disconnect the connector plug (10) from the connector socket (50).

10. Use of a cryogenic connector (1) according to claim 9 **characterized in that** the pneumatic actuator (52) of the securing device (52) is caused to reduce said securing force (F1) shortly before said lift-off of the launcher (100).

11. Use of a cryogenic connector (1) according to one of the claims 2 to 8 for releasably connecting a fuel tank (110) with a payload fairing (102) within a launcher (100),
**characterized in that:**
- the connector plug (10) is connected to said payload fairing (102) of the launcher (100), preferably by means of a first connecting hose(s) (85.1); and
- the connector socket (50) is connected to said tank (110), preferably by means of a second connecting hose(s) (85.2);
or:
- the connector socket (50) is connected to said payload fairing (102) of the launcher (100), preferably by means of a first connecting hose(s) (85.1); and
- the connector plug (10) is connected to said tank (110), preferably by means of a second connecting hose(s) (85.2);
wherein a pneumatic connector separation device (103) is provided to apply a separation force (F5) upon or shortly before separation of said payload fairing (102) so as to thereby disconnect the connector plug (10) from the connector socket (50) to allow separation of the payload fairing (102) from the tank (110).

12. Use of a cryogenic connector (1) according to claim 11 **characterized in that** connector separation device (103) is a pneumatic connector separation device (103) configured to act on said close-release element (62), said pneumatic connector separation device (103) being preferably attached to the payload fairing (102).

## Patentansprüche

1. Kryogener Verbinder (1), umfassend:
- einen Verbinderstecker (10), umfassend:
- einen im Allgemeinen zylindrischen Steckerkörper (11), der einen im Allgemeinen zylindrischen Steckerdurchgang (15) aufweist, der sich durch ihn erstreckt;
- einen Stutzen (12);
- eine Verbinderbuchse (50), umfassend:
- einen im Allgemeinen zylindrischen Buchsenkörper (51), der einen im Allgemeinen zylindrischen Buchsendurchgang (55) aufweist, der sich durch ihn erstreckt;
- eine Schnellkupplung (60), die dafür ausgelegt ist, mit dem Stutzen (12) verriegelnd in Eingriff bringbar zu sein, wobei die Schnellkupplung (60) ein Schließ- und Freigabeelement (62) aufweist, das dafür ausgelegt ist, die Schnellkupplung (60) zwischen einer geschlossenen Position und einer freigegebenen Position umzuschalten;
- eine Feststellvorrichtung (52), die dafür ausgelegt ist, eine Feststellkraft (F1) an das Schließ- und Freigabeelement (62) anzulegen, um die Schnellkupplung (60) in ihrer geschlossenen Position festzustellen;
- Mittel zum Freigeben des Schließ- und Freigabeelements (62), die dafür ausgelegt sind, eine Freigabekraft (F2), die der Feststellkraft (F1) entgegengesetzt ist und größer als diese ist, an das Schließ- und Freigabeelement (62) anzulegen, um dadurch die Schnellkupplung (60) in ihre freigegebene Position zu bringen, um zu ermöglichen, dass der Verbinderstecker (10) von der Verbinderbuchse (50) getrennt wird;
wobei der kryogene Verbinder (1) dafür ausgelegt ist, ein kryogenes Medium zwischen dem Steckerdurchgang (15) und dem Buchsendurchgang (55) zu befördern, wenn der Verbinderstecker (10) verriegelbar durch die Verbinderbuchse (50) aufgenommen wird,
**dadurch gekennzeichnet, dass** die Feststellvorrichtung (52) eine pneumatische Feststellvorrichtung ist, die ein pneumatisches Stellglied umfasst, das dafür ausgelegt ist, die Feststellkraft (F1) an das Schließ- und Freigabeelement (62) anzulegen, und dass die Feststellvorrichtung (52) ferner eine Verbinderfeder umfasst, die dafür ausgelegt ist, eine sekundäre Feststellkraft an den Verriegelungsring (62) anzulegen.

2. Kryogener Verbinder (1) nach Anspruch 1,
**dadurch gekennzeichnet, dass** das Mittel zum Freigeben des Schließ- und Freigabeelements (62) derart angeordnet ist, dass es mit einem ersten Ende (70.1) einer Leine (70) verbindbar ist und derart ausgestaltet ist, dass die Leine auf das Schließ- und Freigabeelement (62) einwirkt, wenn der kryogene Stecker (10) von einem distalen Ende der Leine (70) weggezogen wird.

3. Kryogener Verbinder (1) nach Anspruch 1 oder 2,
**dadurch gekennzeichnet, dass**:
- die Schnellkupplung eine Kugelverriegelungskupplung (60) ist, die eine Gruppe von Kugeln (63) umfasst, die in Löchern positioniert sind, die um einen inneren Umfang des zylindrischen Buchsenkörpers (51) angeordnet sind;
- der Stutzen (12) des Verbindersteckers (10) eine Verriegelungsnut (13) umfasst;
- das Schließ- und Freigabeelement (62) ein Verriegelungsring ist, der an einer Verriegelungshülse (61) befestigt ist, die um einen äußeren Umfang des zylindrischen Buchsenkörpers (51) angeordnet ist und dafür ausgelegt ist, in der geschlossenen Position der Kugelverriegelungskupplung (60) die Gruppe von Kugeln (63) zur Verriegelungsnut (13) zu zwingen, um dadurch den Verbinderstecker (10) mit der Verbinderbuchse (50) zu verriegeln.

4. Kryogener Verbinder (1) nach Anspruch 1,
**dadurch gekennzeichnet, dass** das pneumatische Stellglied (52) Folgendes umfasst: einen Zylinder (52.2), der vorzugsweise an einem Stellgliedfixierring (54) fixiert ist, der an dem Buchsenkörper (51) befestigt ist, und einen Kolben (52.1) mit einem distalen Ende, das auf das Schließ- und Freigabeelement (62) einwirkt.

5. Kryogener Verbinder (1) nach einem der vorhergehenden Ansprüche, **dadurch gekennzeichnet, dass** die Verbinderbuchse (50) und/oder der Verbinderstecker (10) dafür eingerichtet ist/sind, einen kryogenen Schlauch (80) aufzunehmen.

6. Kryogener Verbinder (1) nach einem der vorhergehenden Ansprüche, **dadurch gekennzeichnet, dass** der Stutzen (12) des Verbindersteckers (10) mit einem vorbestimmten Bruchpunkt versehen ist, der dafür ausgelegt ist, zu brechen, wenn eine Schwellenkraft angelegt wird, die größer als die Freigabekraft (F2) ist, um eine Trennung des Verbindersteckers (10) und der Verbinderbuchse (50) auch trotz einer Funktionsstörung der Schnellkupplung (60) und/oder der Feststellvorrichtung (52) und/oder der Mittel zum Freigeben des Schließ- und Freigabeelements (62) sicherzustellen.

7. Kryogener Verbinder (1) nach einem der vorhergehenden Ansprüche, **dadurch gekennzeichnet, dass** ein Kupplerbalg (90) um den kryogenen Verbinder (1) vorzugsweise entlang seiner gesamten Länge von einem distalen Ende des Verbindersteckers (10) zu einem distalen Ende der Verbinderbuchse (50) vorgesehen ist, wobei der Kupplerbalg (90) vorgesehen ist, um eine Vereisung des kryogenen Verbinders (1) zu verhindern, wenn ein kryogenes Medium hindurchbefördert wird.

8. Kryogener Verbinder (1) nach Anspruch 7, **dadurch gekennzeichnet, dass** der Kupplerbalg (90) mit einer Spülgaszufuhrleitung (91) versehen ist, um den Kupplerbalg (90) mit einem Spülgas zu versorgen.

9. Verwendung eines kryogenen Verbinders (1) nach einem der Ansprüche 2 bis 8 zum lösbaren Verbinden eines Betankungssystems (201) eines Startturms (200) mit einer Trägerrakete (100) für eine Nutzlast/Rakete, **dadurch gekennzeichnet, dass**:
- der Verbinderstecker (10) des kryogenen Verbinders (1) an der Trägerrakete (100) befestigt ist;
- die Verbinderbuchse (50) an einem äußersten Ende eines Kraftstoffzufuhrschlauchs (80) befestigt ist;
- ein entgegengesetztes distales Ende des Kraftstoffzufuhrschlauchs (80) an dem Betankungssystem (201) befestigt ist;
- ein erstes Ende (70.1) der Leine (70) an dem Schließ- und Freigabeelement (62) befestigt ist;
- ein distales zweites Ende (70.2) der Leine (70) mit dem Startturm (200) verbunden ist;
wobei der kryogene Verbinder (1) derart ausgestaltet ist, dass bei einem Abheben der Trägerrakete (100) um eine vordefinierte Abhebedistanz (D) die Spannung, die dadurch an die Leine (70) angelegt wird, zu einer Freigabekraft (F2) führt, die der Feststellkraft (F1), die an das Schließ- und Freigabeelement (62) angelegt wird, entgegengesetzt ist und größer als diese ist, um dadurch den Verbinderstecker (10) von der Verbinderbuchse (50) abzukoppeln.

10. Verwendung eines kryogenen Verbinders (1) nach Anspruch 9, **dadurch gekennzeichnet, dass** das pneumatische Stellglied (52) der Feststellvorrichtung (52) veranlasst wird, die Feststellkraft (F1) kurz vor dem Abheben der Trägerrakete (100) zu reduzieren.

11. Verwendung eines kryogenen Verbinders (1) nach einem der Ansprüche 2 bis 8 zum lösbaren Verbinden eines Kraftstofftanks (110) mit einer Nutzlastverkleidung (102) in einer Trägerrakete (100),
**dadurch gekennzeichnet, dass**:
- der Verbinderstecker (10) mit der Nutzlastverkleidung (102) der Trägerrakete (100) verbunden ist, vorzugsweise mithilfe eines ersten Verbindungsschlauchs (von ersten Verbindungschläuchen) (85.1); und
- die Verbinderbuchse (50) mit dem Tank (110) verbunden ist, vorzugsweise mithilfe eines zweiten Verbindungsschlauchs (von zweiten Verbindungsschläuchen) (85.2);
oder:
- die Verbinderbuchse (50) mit der Nutzlastverkleidung (102) der Trägerrakete (100) verbunden ist, vorzugsweise mithilfe eines ersten Verbindungsschlauchs (von ersten Verbindungsschläuchen) (85.1); und
- der Verbinderstecker (10) mit dem Tank (110) verbunden ist, vorzugsweise mithilfe eines zweiten Verbindungsschlauchs (von zweiten Verbindungsschläuchen) (85.2);
wobei eine pneumatische Verbindertrennvorrichtung (103) vorgesehen ist, um eine Trennkraft (F5) bei oder kurz vor der Trennung der Nutzlastverkleidung (102) anzulegen, um dadurch den Verbinderstecker (10) von der Verbinderbuchse (50) abzukoppeln, um eine Trennung der Nutzlastverkleidung (102) vom Tank (110) zu ermöglichen.

12. Verwendung eines kryogenen Verbinders (1) nach Anspruch 11, **dadurch gekennzeichnet, dass** die Verbindertrennvorrichtung (103) eine pneumatische Verbindertrennvorrichtung (103) ist, die dafür ausgelegt ist, auf das Schließ- und Freigabeelement (62) einzuwirken, wobei die pneumatische Verbindertrennvorrichtung (103) vorzugsweise an der Nutzlastverkleidung (102) befestigt ist.

## Revendications

1. Connecteur cryogénique (1) comprenant :
- une fiche de connecteur (10) comprenant :
- un corps de fiche généralement cylindrique (11) avec un passage de fiche généralement cylindrique (15) s'étendant à travers ;
- un manchon (12) ;
- une prise de connecteur (50) comprenant :
- un corps de prise généralement cylindrique (51) avec un passage de prise généralement cylindrique (55) s'étendant à travers ;
- un raccord rapide (60) configuré pour venir s'engager par verrouillage avec ledit manchon (12), ledit raccord rapide (60) ayant un élément de blocage/déblocage (62) configuré pour pouvoir commuter ledit raccord rapide (60) entre une position fermée et une position déverrouillée ;
- un dispositif de fixation (52) configuré pour appliquer une force de fixation (F1) sur ledit élément de blocage/déblocage (62) pour fixer le raccord rapide (60) dans sa position fermée ;
- des moyens pour débloquer l'élément de blocage/déblocage (62) configurés pour appliquer une force de déblocage (F2) opposée et supérieure à ladite force de fixation (F1) sur ledit élément de blocage/déblocage (62) pour ainsi amener le raccord rapide (60) dans sa position de déblocage, et pouvoir ainsi séparer la fiche de connecteur (10) de la prise de connecteur (50) ;
le connecteur cryogénique (1) étant configuré pour transférer un fluide cryogénique entre ledit passage de fiche (15) et le passage de prise (55) lorsque la fiche de connecteur (10) est reçue par verrouillage par la prise de connecteur (50),
**caractérisé en ce que** ledit dispositif de fixation (52) est un dispositif de fixation pneumatique comprenant un vérin pneumatique configuré pour appliquer ladite force de fixation (F1) sur ledit élément de blocage/déblocage (62), et **en ce que** ledit dispositif de fixation (52) comprend en outre un ressort de connecteur configuré pour appliquer une force de fixation secondaire sur ladite bague de verrouillage (62).

2. Connecteur cryogénique (1) selon la revendication 1, **caractérisé en ce que** lesdits moyens pour débloquer l'élément de blocage/déblocage (62) sont agencés de façon à pouvoir être raccordés à une première extrémité (70.1) d'un cordon (70) et sont configurés de sorte que ledit cordon agit sur ledit élément de blocage/déblocage (62) lorsque la fiche cryogénique (10) est éloignée d'une extrémité distale dudit cordon (70).

3. Connecteur cryogénique (1) selon la revendication 1 ou 2, **caractérisé en ce que** :
- ledit raccord rapide est un raccord à billes (60) comprenant un groupe de billes (63) positionnées dans des trous situés autour d'une circonférence interne du corps de prise cylindrique (51) ;
- ledit manchon (12) de la fiche de connecteur (10) comprend une rainure de blocage (13) ;
- ledit élément de blocage/déblocage (62) est une bague de verrouillage fixée à un manchon de verrouillage (61) disposé autour d'une circonférence extérieure du corps de prise cylindrique (51) et configuré pour pousser, dans la position fermée du raccord à billes (60), ledit groupe de billes (63) vers la rainure de blocage (13) pour ainsi verrouiller la fiche de connecteur (10) avec la prise de connecteur (50).

4. Connecteur cryogénique (1) selon la revendication 1, **caractérisé en ce que** ledit vérin pneumatique (52) comprend un cylindre (52.2), de préférence fixé à un anneau de fixation du vérin (54) fixé au corps de la prise (51), et un piston (52.1) avec une extrémité distale agissant sur ledit élément de blocage/déblocage (62).

5. Connecteur cryogénique (1) selon l'une des revendications précédentes, **caractérisé en ce que** ladite prise de connecteur (50) et/ou ladite fiche de connecteur (10) est/sont adaptée(s) pour recevoir un flexible cryogénique (80).

6. Connecteur cryogénique (1) selon l'une des revendications précédentes, **caractérisé en ce que** ledit manchon (12) de la fiche de connecteur (10) est fourni avec un point de rupture prédéterminé configuré pour rompre lors de l'application d'une force seuil supérieure à ladite force de déblocage (F2) pour garantir la séparation de la fiche de connecteur (10) et de la prise de connecteur (50) malgré un dysfonctionnement du raccord rapide (60) et/ou du dispositif de fixation (52) et/ou des moyens pour libérer l'élément de blocage/déblocage (62).

7. Connecteur cryogénique (1) selon l'une des revendications précédentes, **caractérisé en ce qu'**il est fourni un soufflet de coupleur (90) autour du connecteur cryogénique (1), de préférence sur toute sa longueur depuis une extrémité distale de la fiche de connecteur (10) à une extrémité distale de la prise de connecteur (50), le soufflet de coupleur (90) étant fourni pour éviter que le connecteur cryogénique (1) ne gèle lorsqu'il est transporté à l'intérieur du fluide cryogénique.

8. Connecteur cryogénique (1) selon la revendication 7, **caractérisé en ce que** ledit soufflet de coupleur (90) est fourni avec une ligne d'amenée de gaz de purge (91) pour fournir au soufflet de coupleur (90) un gaz de purge.

9. Utilisation d'un connecteur cryogénique (1) selon l'une des revendications 2 à 8 pour raccorder de façon amovible un système d'alimentation de carburant (201) d'une tour de lancement (200) à un dispositif de lancement (100) pour une charge utile/un missile, **caractérisée en ce que** :
- la fiche de connecteur (10) du connecteur cryogénique (1) est fixée audit dispositif de lancement (100) ;
- la prise de connecteur (50) est fixée à une extrémité d'un tuyau d'alimentation en carburant (80) ;
- une extrémité distale opposée dudit tuyau d'alimentation en carburant (80) est fixée audit système d'alimentation de carburant (201) ;
- une première extrémité (70.1) dudit cordon (70) est fixée audit élément de blocage/déblocage (62) ;
- une deuxième extrémité distale (70.2) du cordon (70) est fixée à ladite tour de lancement (200) ;
dans laquelle le connecteur cryogénique (1) est configuré de sorte que, lors du décollage dudit dispositif de lancement (100) d'une distance de décollage prédéfinie (D), la tension ainsi appliquée sur le cordon (70) entraîne une force de libération (F2) opposée et supérieure à ladite force de fixation (F1) appliquée sur ledit élément de blocage/déblocage (62) pour ainsi débrancher la fiche de connecteur (10) de la prise de connecteur (50).

10. Utilisation d'un connecteur cryogénique (1) selon la revendication 9, **caractérisée en ce que** le vérin pneumatique (52) du dispositif de fixation (52) est amené à réduire ladite force de fixation (F1) brièvement avant ledit décollage dudit dispositif de lancement (100).

11. Utilisation d'un connecteur cryogénique (1) selon l'une des revendications 2 à 8 pour raccorder de façon amovible un réservoir de carburant (110) avec une coiffe de charge utile (102) dans un dispositif de lancement (100),
**caractérisée en ce que** :
- la fiche de connecteur (10) est raccordée à ladite coiffe de charge utile (102) du dispositif de lancement (100), de préférence par le biais d'un premier flexible de raccordement (85.1) ; et
- la prise de connecteur (50) est raccordée audit réservoir (110), de préférence par le biais d'un deuxième flexible de raccordement (85.2) ;
ou :
- la prise de connecteur (50) est raccordée à ladite coiffe de charge utile (102) du dispositif de lancement (100), de préférence par le biais d'un premier flexible de raccordement (85.1) ; et
- la fiche de connecteur (10) est raccordée audit réservoir (110), de préférence par le biais d'un deuxième flexible de raccordement (85.2) ;
dans laquelle il est prévu un dispositif de séparation de connecteur pneumatique (103) pour appliquer une force de séparation (F5) au moment de ou légèrement avant la séparation de ladite coiffe de charge utile (102) de façon à débrancher la fiche de connecteur (10) de la prise de connecteur (50) pour permettre de séparer la coiffe de charge utile (102) du réservoir (110).

12. Utilisation d'un connecteur cryogénique (1) selon la revendication 11, **caractérisée en ce que** le dispositif de séparation du connecteur (103) est un dispositif de séparation de connecteur pneumatique (103) configuré pour agir sur ledit élément de blocage/déblocage (62), ledit dispositif de séparation de connecteur pneumatique (103) étant de préférence fixé à la coiffe de charge utile (102).
